Europäisches Patentamt

European Patent Office

Office européen des brevets

(19)

(11) **EP 1 496 561 A2**

(12) **EUROPEAN PATENT APPLICATION**

(43) Date of publication:
**12.01.2005 Bulletin 2005/02**

(51) Int Cl.7: **H01M 8/10**

(21) Application number: **04254135.9**

(22) Date of filing: **09.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **11.07.2003 JP 2003195499**
**31.07.2003 JP 2003204483**

(71) Applicant: **Tokuyama Corporation**
**Shunan-shi, Yamaguchi 745-0053 (JP)**

(72) Inventors:
• **Fukuta, Kenji**
**Shunan-shi, Yamaguchi 745-0053 (JP)**

• **Sadasue, Kazuyuki**
**Shunan-shi, Yamaguchi 745-0053 (JP)**
• **Isomura, Takenori**
**Shunan-shi, Yamaguchi 745-0053 (JP)**
• **Sakata, Kanji**
**Shunan-shi, Yamaguchi 745-0053 (JP)**

(74) Representative: **Cresswell, Thomas Anthony**
**J.A. KEMP & CO.**
**14 South Square**
**Gray's Inn**
**London WC1R 5JJ (GB)**

(54) **A laminate useful as a membrane-electrode assembly for fuel cells, production process therefor and a fuel cell provided with the laminate**

(57) A laminate consisting of an ion exchange membrane layer comprising a porous film reinforcement and a crosslinked ion exchange resin and a conductive layer formed on at least one side of the ion exchange membrane layer and comprising conductive inorganic particles and a crosslinked ion exchange resin, wherein

the ion exchange membrane layer and the conductive layer are integrated with each other by the above ion exchange resins constituting these layers.

This laminate is excellent in dimensional stability, heat resistance and methanol impermeability, which makes it suitable for use in electrochemical devices such as a direct methanol type fuel cell as a membrane-electrode assembly, has high bonding properties between the electrode layer and the ion exchange membrane layer of the membrane-electrode assembly, and provides a fuel cell whose output is not reduced by long-term use.

**EP 1 496 561 A2**

**Description**

Field of the Invention

The present invention relates to a laminate consisting of an ion exchange membrane layer and a conductive layer, for use in an electrochemical device such as a cell or a sensor, and a production process and use thereof. More specifically, it relates to a laminate consisting of an ion exchange membrane layer and a conductive layer, suitable for use in a direct methanol type fuel cell in particular, and a production process and use thereof.

Description of the Prior Art

Fuel cells are power generation systems for collecting chemical energy generated upon a reaction between a fuel and an oxidant as electric power by continuously supplying these. Fuel cells are roughly divided into alkali type, phosphate type and solid polymer electrolyte type fuel cells all of which operate at a relatively low temperature, molten carbonate type fuel cells and solid oxide electrolyte type fuel cells which operate at a high temperature according to the type of the electrolyte used in these fuel cells.

Out of these, generally solid polymer electrolyte type fuel cells function as a fuel cell by bonding a gas diffusion electrode carrying a catalyst to both sides of a solid polymer membrane which serves as an electrolyte, supplying a fuel such as a hydrogen gas or methanol into a chamber (fuel chamber) in which one of the gas diffusion electrodes is existent and oxygen as an oxydant or an oxygen-containing gas such as air into a chamber in which the other gas diffusion electrode is existent, and connecting an external load circuit between the both gas diffusion electrodes. Out of these, a direct methanol type fuel cell which directly uses methanol as a fuel is expected to be used as a relatively small output power source for portable equipment because the liquid fuel is easy to handle and inexpensive.

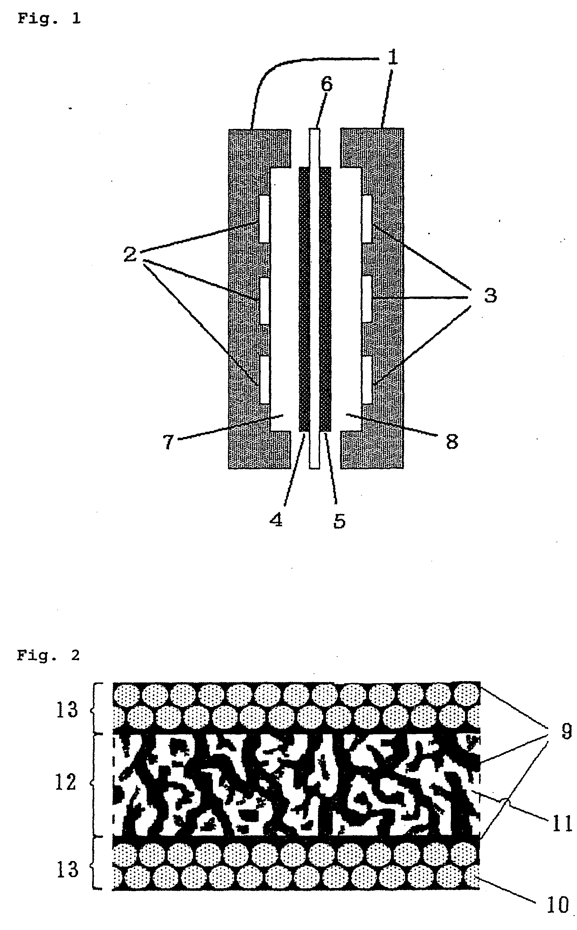

The basic structure of this direct methanol type fuel cell is shown in Fig. 1. In Fig. 1, reference numeral 1 denotes cell interstructure, 2 fuel holes, 3 oxidizing gas holes, 4 a diffusion electrode on the fuel chamber side, 5 a gas diffusion electrode on the oxidant chamber side and 6 a solid polymer electrolyte membrane. In this direct methanol type fuel cell, a proton (hydrogen cation) and an electron are formed from methanol supplied into a fuel chamber 7 on the diffusion electrode 4 on the fuel chamber side. The proton goes to the gas diffusion electrodes 5 on the other oxidant chamber 8 through the solid polymer electrolyte membrane 6 to react with oxygen contained in air or oxygen gas to form water. At this point, the electron formed on the diffusion electrode 4 on the fuel chamber side moves to the gas diffusion electrode 5 on the oxidant chamber side through the external load circuit to obtain electric energy.

In the direct methanol type fuel cell having the above structure, a cation exchange membrane is generally used as the above solid polymer electrolyte membrane. The cation exchange membrane must have low electric resistance, high water retentivity, long-term stability and excellent physical strength. A perfluorocarbon sulfonic acid membrane has been mainly used as the cation exchange membrane. Although this membrane has excellent chemical stability, it is unsatisfactory in terms of water retentivity, whereby the cation exchange membrane becomes dry to reduce the conductivity of a proton. It is also unsatisfactory in terms of physical strength, whereby it is difficult to obtain low electric resistance by reducing the thickness of the membrane. Further, a methanol cross-over that methanol permeates through an ion exchange membrane tends to occur. Moreover, the perfluorocarbon sulfonic acid membrane is expensive (see pages 33 to 41 of "Development and Application of Solid Polymer Type Fuel Cells" published by NTS Co., Ltd. on April 28, 2000, and page 16 of "Survey of Technical Trends of Fuel Cells" published by the Technical Survey Division of the Japanese Patent Office on May 31, 2001).

To solve these problems, there is proposed use of an ion exchange membrane formed by using a porous film of polyethylene et al as a reinforcement and a hydrocarbon-based ion exchange resin such as polystyrene sulfonic acid. In this case, a crosslinked hydrocarbon-based ion exchange resin is often used to obtain dimensional stability, heat resistance or high mechanical strength (JP-A 11-335473 and JP-A 2001-135328) (the term "JP-A" as used herein means an "unexamined published Japanese patent application").

As described above, the existence of a diffusion electrode on a fuel chamber side and a gas diffusion electrode on an oxidant chamber side (both will be simply referred to as "catalytic electrodes" hereinafter) for collecting electricity from a fuel such as methanol is essential to the solid polymer electrolyte type fuel cell. On the diffusion electrode on the fuel chamber side, the fuel is oxidized to collect an electron. A proton is formed at the same time upon this reaction. This proton moves to the gas diffusion electrode on the oxidant chamber side through the cation exchange membrane as a diaphragm to react with the oxidant to become water. To smoothen the movement of the proton and collect the electron (electricity) continuously, a substance having proton conductivity must be in contact with a site where the fuel is oxidized. In general, the catalytic electrode is composed of a catalyst such as platinum for promoting the reaction, an electron conductive substance through which the formed electron can move, such as conductive carbon, and a cation conductive substance through which a proton can move, such as a cation exchange resin. Therefore, to facilitate the movement of the proton and obtain high cell performance, not only the ion conductivities of the cation exchange resin of the catalytic electrode and the cation exchange membrane as a diaphragm but also ion conductivity between these materials are extremely important.

In the prior art, when a perfluorocarbon sulfonic acid membrane is used as a diaphragm, a perfluorocarbon sulfonic acid resin is also used as the cation exchange resin of the catalytic electrode, and paste composed of this resin, carbon carrying a catalyst and a diluting solvent is applied to the perfluorocarbon sulfonic acid used as a diaphragm, dried and hot pressed, whereby sufficiently high ion conductivity between the catalytic electrode and the membrane can be obtained (see JP-A 6-150937). It is considered that this is because thermal fusion is caused by hot pressing to integrate the catalytic electrode with the membrane as the perfluorocarbon sulfonic acid resin in use is thermoplastic.

However, studies conducted by the inventors of the present invention revealed that the following problem arises when the above crosslinked ion exchange resin is used as the resin of the ion exchange membrane as a diaphragm. That is, even when the above paste is applied, dried and hot pressed to form a catalytic electrode on the ion exchange membrane, satisfactory fusion does not occur, whereby bonding between the catalytic electrode and the membrane becomes unsatisfactory. It is assumed that this is because the resin of the ion exchange membrane is crosslinked. Ion conductivity becomes also inferior due to unsatisfactory bonding. Even when relatively high ion conductivity is obtained in the initial stage of the production process, bonding properties gradually degrade because its use state, that is, immersion in methanol is maintained, and the catalytic electrode is often separated from the membrane in a relatively short period of time.

Summary of the Invention

It is an object of the present invention to provide a laminate which consists of an ion exchange membrane layer and a conductive layer and is useful as a membrane-electrode assembly for fuel cells.

It is another object of the present invention to provide a laminate which is a membrane-catalytic electrode assembly having excellent bonding properties between the electrode layer and the membrane layer and able to be used in a direct methanol type fuel cell even when an ion exchange membrane layer essentially composed of a crosslinked ion exchange resin having excellent dimensional stability, heat resistance, mechanical strength and methanol impermeability is used.

It is still another object of the present invention to provide a process for producing the above laminate of the present invention industrially advantageously.

It is a further object of the present invention to provide a fuel cell having the above laminate of the present invention as a membrane-electrode assembly.

Other objects and advantages of the present invention will become apparent from the following description.

According to the present invention, firstly, the above objects and advantages of the present invention are attained by a laminate consisting of an ion exchange membrane layer comprising a porous film reinforcement and a crosslinked ion exchange resin and a conductive layer formed on at least one side of the ion exchange membrane layer and comprising conductive inorganic particles and a crosslinked ion exchange resin, wherein the ion exchange membrane layer and the conductive layer are integrated with each other by the above ion exchange resins constituting these layers.

According to the present invention, secondly, the above objects and advantages of the present invention are attained by a process for producing the above laminate of the present invention (to be referred to as "first production process of the present invention" hereinafter); comprising the steps of:

(1) applying a polymerizable composition comprising a polyfunctional polymerizable monomer, conductive inorganic particles and a polymerization initiator to a porous film reinforcement and moving and infiltrating part of the polymerizable composition into the pores of the porous film reinforcement;
(2) polymerizing the polymerizable composition to integrate the porous film reinforcement with the layer of a conductive composition by the formed crosslinked polymer; and
(3) optionally introducing an ion exchangeable group into the crosslinked polymer of the obtained laminate.

According to the present invention, thirdly, the above objects and advantages of the present invention are attained by a process for producing the above laminate of the present invention (to be referred to as "second production process of the present invention" hereinafter), comprising the steps of:

(1) impregnating a porous film reinforcement with a polymerizable composition comprising a polyfunctional polymerizable monomer and a polymerization initiator;
(2) forming a layer of a conductive composition comprising conductive inorganic particles and a binder resin on at least one side of the porous film reinforcement impregnated with the polymerizable composition and moving and infiltrating part of the polymerizable composition impregnated into the porous film reinforcement into the layer;

(3) polymerizing the polymerizable composition to integrate the porous film reinforcement with the layer of the conductive composition by the formed crosslinked polymer; and

(4) optionally introducing an ion exchangeable group into the crosslinked polymer of the obtained laminate.

According to the present invention, in the fourth place, the above objects and advantages of the present invention are attained by a fuel cell comprising the laminate of the present invention as a membrane-electrode assembly.

In the research process for attaining the present invention, a method in which the surface of an adherend is made rough and the development of mechanical mating force is expected is conceivable as one of means of improving bonding properties. More specifically, the surface of an ion exchange membrane as a diaphragm is subjected to a sandblasting or plasma treatment and the above paste is applied to the treated surface to form an electrode portion. According to studies conducted by the inventors of the present invention, bonding properties are improved by this method. However, this method needs the step of treating the surface of the ion exchange membrane and accordingly, a dedicated device for this step is required, thereby increasing the number of production steps. Therefore, it cannot be said that this method is industrially advantageous.

As another means of improving bonding properties, there is conceivable a method in which an adhesive composition having ion conductivity and adhesion to a crosslinked ion exchange resin contained in a membrane is used to adhere the catalytic electrode portion to the membrane portion. However, this method also needs the step of applying the adhesive composition, and the moving distance of a proton is extended by the thickness of the adhesive composition layer, thereby increasing the total electric resistance disadvantageously.

After other methods were studied, it was found that a laminate having high bonding properties can be obtained by changing the process for producing a membrane-catalytic electrode assembly (to be simply referred to as "electrode assembly" hereinafter) to the following completely new method.

That is, as described above, the electrode assembly of the prior art is obtained by first manufacturing an ion exchange membrane and then forming an electrode on the ion exchange membrane. This ion exchange membrane is generally manufactured by infiltrating a polymerizable monomer such as styrene and divinylbenzene into a reinforcement such as a polyvinyl chloride fabric or a polyolefin porous film, polymerizing this polymerizable monomer to form a polymer and introducing an ion exchangeable group into this polymer. The inventors of the present invention assumed that the reason why sufficiently high bonding properties are not obtained by thermal fusion is a crosslinked polymer forming the ion exchange membrane and thought it might be better to form a catalytic electrode before the formation of the crosslinked polymer. They further conducted studies on the method of forming the catalytic electrode before the polymerization of the above polymerizable monomer and found various methods. They also found that what are manufactured by these methods have the same characteristic properties and accomplished the present invention.

Brief Description of the Drawings

Fig. 1 is a diagram showing the basic structure of a direct methanol type fuel cell:

Fig. 2 is a sectional view showing the typical structure of the laminate of the present invention; and

Fig. 3 shows the analytical results of the section of the junction portion of a membrane-electrode assembly manufactured in Example 1 with an electron beam microanalyzer.

Detailed Description of the Preferred Embodiment

The laminate of the present invention consists of an ion exchange membrane layer and a conductive layer. The ion exchange membrane layer comprises a porous film reinforcement and a crosslinked ion exchange resin, and the conductive layer comprises conductive inorganic particles and a crosslinked ion exchange resin. The above ion exchange membrane layer and the above conductive layer are integrated with each other by the above ion exchange resins constituting these layers.

When a crosslinked ion exchange resin is used, a laminate having excellent physical properties such as dimensional stability, heat resistance, mechanical strength and methanol impermeability is obtained and therefore can be suitably used as a diaphragm for the direct methanol type fuel cell.

Any known crosslinked ion exchange resin having an ion exchangeable group may be used as the ion exchange resin. Specific examples of the ion exchangeable group of the ion exchange resin include sulfonic acid group, carboxylic acid group and phosphonic acid group as cation exchangeable groups and primary to tertiary amino groups, quaternary ammonium group, pyridyl group, imidazole group, quaternary pyridinium group and quaternary imidazolium group as anion exchangeable groups.

When the crosslinked ion exchange resin is used in the membrane layer of an electrode assembly for fuel cells, an ion exchange resin having a cation exchangeable group is preferred, and an ion exchange resin having a sulfonic acid group which is a strong acid group is particularly preferred.

As a portion (to be also referred to as "resin skeleton portion" hereinafter) other than the above ion exchangeable group of the crosslinked ion exchange resin, any known resin skelton portions such as polystyrene, polyacryl, polyamide, polyether or polyether sulfone may be used. Polystyrene is particularly preferred because it is excellent in the chemical stability of the main chain which is mainly a carbon-carbon bond, various ion exchangeable groups are easily introduced, and its raw materials are inexpensive.

A plurality of crosslinked ion exchange resins which differ from one another in the above ion exchangeable group and/or resin skeleton portion may be used in combination. Further, a non-crosslinked ion exchange resin may be used in limits that do not impair various physical properties for application purpose.

The method of manufacturing a crosslinked ion exchange resin having an ion exchangeable group and a resin skeleton portion will be detailed in the section "process for producing the laminate of the present invention".

As the porous film constituting the ion exchange membrane layer of the laminate of the present invention, for example, a porous stretched film, nonwoven paper, fabric, nonwoven cloth, paper or inorganic film in which pores extend from the front side to the rear side may be used without restrictions. They may be made of a thermoplastic resin composition, thermosetting resin composition, inorganic material or a mixture thereof. A thermoplastic resin composition is particularly preferred because it is easily produced and has high adhesive strength to a hydrocarbon-based ion exchange resin. Examples of the thermoplastic resin composition include polyolefin resins such as homopolymers and copolymers of an $\alpha$-olefin such as ethylene, propylene, 1-butene, 1-pentene, 1-hexene, 3-methyl-1-butene, 4-methyl-1-pentene or 5-methyl-1-heptene; vinyl chloride-based resins such as polyvinyl chloride, vinyl chloride-vinyl acetate copolymer, vinyl chloride-vinylidene chloride copolymer and vinyl chloride-olefin copolymer; fluororesins such as polytetrafluoroethylene, polychlorotrifluoroethylene, polyvinylidene fluoride, tetrafluoroethylene-hexafluoropropylene copolymer, tetrafluoroethylene-perfluoroalkylvinyl ether copolymer and tetrafluoroethylene-ethylene copolymer; and polyamide resins such as nylon 6 and nylon 66. Out of these, polyolefin resins are preferred because they have excellent mechanical strength, chemical stability, chemical resistance and good compatibility with a hydrocarbon-based ion exchange resin. Out of the polyolefin resins, polyethylene and polypropylene resins are particularly preferred and polyethylene resin is the most ideal.

A polyolefin resin porous stretched film is preferred because it has a smooth surface, excellent adhesion to a catalytic electrode layer and excellent strength, and a polyethylene resin porous stretched film is particularly preferred.

The porous stretched film used as the reinforcement of the ion exchange membrane layer has a pore diameter (JIS K3832) of preferably 0.005 to 5.0 μm, particularly preferably 0.01 to 2.0 μm, a porosity of preferably 20 to 95 %, particularly preferably 30 to 90 % and an air permeability (JIS P-8117) of preferably 1,500 seconds or less, particularly preferably 1,000 seconds or less. The thickness of the porous film is preferably 5 to 150 μm, more preferably 10 to 120 μm, particularly preferably 15 to 50 μm to ensure that the obtained ion exchange membrane layer can be made thin and have sufficiently high strength.

The porous stretched film may be obtained by methods disclosed by JP-A 9-212964 and JP-A 2002-338721 and can be acquired from the market (for example, Hi-pore of Asahi Chemical Industry, Co., Ltd., U-pore of Ube Industries, Ltd., Setera of Tonen Tapils Co., Ltd., Excepore of Nitto Denko Corporation, Hilet of Mitsui Chemical Co., Ltd., etc.).

The ion exchange membrane layer may contain known constituents of an ion exchange membrane in limits that do not impair the effect of the present invention, in addition to the above ion exchange resin and porous film reinforcement. The constituents include a plasticizer, inorganic filler, unreacted raw materials used to form an ion exchange resin, impurities derived from the raw materials and a by-product.

In the laminate of the present invention, the conductive layer (may be referred to as "electrode layer" hereinafter) containing conductive inorganic particles is formed on at least one side of the above ion exchange membrane layer.

The conductive inorganic particles may be any known electronic conductive inorganic particles and are made of a metal such as gold, silver, platinum, rhodium, ruthenium, iridium, palladium, osmium, nickel or iron, an alloy thereof, a metal oxide such as tin oxide, indium oxide or indium-tin composite oxide, or conductive carbon. The shape of the conductive inorganic particles is not particularly limited and may be undefined, spherical, fibrous or flaky and suitably selected according to application purpose.

When the laminate of the present invention is used for fuel cells, the conductive inorganic particles are particularly preferably particles comprising a metal as a reactive catalyst carried on a conductive carbon carrier. Any known conductive carbon may be used as this conductive carbon carrying a catalyst. Examples of the conductive carbon carrying a catalyst used as an electrode for fuel cells include what are disclosed by JP-A 2002-329500, JP-A 2002-100373 and JP-A 7-246336 and commercially available products which differ in catalyst and carrier. They may be used directly or after a necessary treatment is made.

In the laminate of the present invention, the above conductive inorganic particles are dispersed in the crosslinked ion exchange resin such that the particles are in contact with each other to develop electronic conductivity. The ion exchangeable group and resin skeleton portion of the ion exchange resin are the same as those of the ion exchange resin constituting the above ion exchange membrane layer. However, this does not mean that the crosslinked ion exchange resin of the ion exchange membrane layer and the crosslinked ion exchange resin of the conductive layer are the same but that the both ion exchange resins may be the same or different.

The biggest feature of the laminate of the present invention is that the ion exchange resin of the conductive layer, that is, the electrode layer and the ion exchange resin of the ion exchange membrane layer are integrated with each other. The word "integrated" means that the ion exchange resins of the both layers are in direct contact with each other and continuous to each other. This improves ion conductivity between the electrode layer and the ion exchange membrane layer, whereby the laminate can be advantageously used for fuel cells.

More specifically, integration between the ion exchange resin of the electrode layer and the ion exchange resin of the ion exchange membrane layer means that the polymerizable monomer used to form the resin skeleton portion of the ion exchange resin of the electrode layer and the polymerizable monomer used to form the resin skeleton portion of the ion exchange resin of the ion exchange membrane layer are polymerised not only in the each layer but also beyond the layers. It does not means that these polymerizable monomers are the same in chemical composition but that they may be different. For example, the ion exchange resin of the ion exchange membrane layer may be a copolymer of styrene and divinylbenzene having a sulfonic acid group and the ion exchange resin of the electrode layer may be an alternating copolymer of styrene and maleic acid if the polymerizable groups of styrene or divinylbenzene of the ion exchange resin of the ion exchange membrane layer and the polymerizable group of styrene or maleic acid of the ion exchange resin of the electrode layer are polymerized with each other. From the viewpoint of production ease, it is particularly preferred that the ion exchange resin of the electrode layer and the ion exchange resin of the ion exchange membrane layer should have the same ion exchangeable group and resin skeleton portion. In a laminate manufactured by the typical process for producing the laminate of the present invention which will be described hereinafter, not only the ion exchange resin of the ion exchange membrane layer but also the ion exchange resin of the electrode layer are polymers crosslinked by a carbon-carbon bond, thereby further improving the heat resistance, chemical stability and dimensional stability of the whole laminate. It is needless to say that a laminate in which the ion exchange resin of an electrode layer is a polymer crosslinked by a carbon-carbon bond has been unknown.

The electrode layer, that is, conductive layer of the laminate of the present invention may contain components other than the above conductive inorganic particles and ion exchange resin of the electrode layer. The components include non-conductive inorganic or organic particles, plasticizer for ion exchange resins, etc.

In the present invention, the above electrode layer may be existent on at least one side of the ion exchange membrane layer but preferably existent on both sides of the ion exchange membrane layer from the viewpoints of production ease and its use for fuel cells.

The thicknesses of the ion exchange membrane layer and the electrode layer of the laminate of the present invention are not particularly limited and may be suitably determined if necessary. As for the laminate for fuel cells, the thickness of the ion exchange membrane layer is preferably 5 to 150 μm, more preferably 10 to 120 μm, particularly preferably 15 to 50 μm. As the ion exchange membrane layer becomes thinner, its electric resistance becomes lower. However, when the ion exchange membrane layer is too thin, a strength problem may arise. The thickness of the electrode layer is preferably 0.1 to 300 μm. As described above, the laminate of the present invention is characterized in that the ion exchange resin of the electrode layer and the ion exchange resin of the ion exchange membrane layer are integrated with each other and there is no clear physical boundary between them. Therefore, the thickness of the ion exchange membrane layer and the thickness of the electrode layer depend on which portion the boundary between them belongs to and cannot be clearly determined. The thickness of a portion where the conductive inorganic particles are contacted to one another and densely existent to develop electronic conductivity is considered as the thickness of the electrode layer and the thickness of a portion where the conductive inorganic particles are not existent or sparsely existent and do not develop electronic conductivity is considered as the thickness of the ion exchange membrane layer. In general, the thickness of the porous film reinforcement used in the ion exchange membrane layer is almost the same as the thickness of the ion exchange membrane layer, while it is various depending on the thickness.

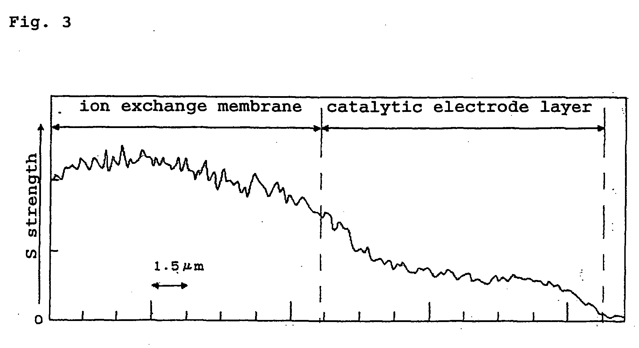

Fig. 2 is a sectional view of an example of the laminate of the present invention supporting the above description. Reference numeral 9 denotes an ion exchange resin, 10 conductive inorganic particles or conductive carbon carrying a catalyst, 11 a porous film reinforcement, 12 an ion exchange membrane layer and 13 an electrode layer.

The above laminate of the present invention may be manufactured by either the first production process or the second production process of the present invention.

In the first production process, a polymerizable composition comprising a polyfunctional polymerizable monomer, conductive inorganic particles and a polymerization initiator is applied to the surface of the porous film reinforcement and part of the applied polymerizable composition is moved and infiltrated into the pores of the porous film reinforcement in the step (1).

The polyfunctional polymerizable monomer may have two or more of polymerizable unsaturated groups.

Examples of the polyfunctional polymerizable monomer include polyfunctional aromatic vinyl compounds such as divinylbenzene, divinylbiphenyl and trivinylbenzene; polyfunctional (meth)acrylic acid derivatives such as trimethylolmethane trimethacrylic esters, methylene bisacrylamide and hexamethylene dimethacrylamide; and mixtures of other polyfunctional polymerizable monomers such as butadiene, chloroprene and divinyl sulfone (to be also referred to as "crosslinking agent" hereinafter).

The above polymerizable composition may contain a monofunctional polymerizable monomer in addition to the polyfunctional polymerizable monomer as required. In case of using the monofunctional polymerizable monomer, it is easy to adjust the degree of crosslinking. Examples of the monofunctional polymerizable monomer include monofunctional aromatic vinyl compounds such as styrene, $\alpha$-methylstyrene, vinyltoluene, 2,4-dimethylstyrene, p-tert-butylstyrene, $\alpha$-halogenated styrene, vinylnaphthalene, vinylpyridine, vinylimidazole and styrenesulfonic acid; monofunctional (meth)acrylic acids and derivatives thereof such as (meth)acrylic acid, methyl (meth)acrylate and (meth)acrylamido-2-methylpropanesulfonic acid; and other vinyl compounds such as vinylphosphonic acid and maleic anhydride.

The above polyfunctional polymerizable monomers and monofunctional polymerizable monomers may be used alone or in combination of two or more.

In the present invention, the above polymerizable composition preferably contains both a polyfunctional polymerizable monomer and a monofunctional polymerizable monomer. Particularly when the laminate of the present invention is used for fuel cells, a polymerizable composition comprising a monofunctional aromatic vinyl compound as the main ingredient and a polyfunctional aromatic vinyl compound in an amount of 0.1 to 30 mol%, preferably 1 to 25 mol%, more preferably 10 to 25 mol%, of the total of all the polymerizable monomers is used because the obtained polymer has excellent acid resistance and electrochemical stability, and provides a membrane having reduced methanol cross-over and membrane resistance. Further, the monofunctional aromatic vinyl compound is preferably styrene, $\alpha$-methylstyrene, vinyltoluene, 2,4-dimethylstyrene, p-tert-butylstyrene, $\alpha$-halogenated styrene or vinylnaphthalene because a sulfonic acid group which is a strong acid group is easily introduced and particularly preferably styrene because it can further increase the density of ion exchangeable groups in the ion exchange membrane layer. The crosslinking agent is preferably a polyfunctional aromatic vinyl compound such as divinylbenzene, divinylbiphenyl or trivinylbenzene.

Any polymerization initiator may be used as the polymerization initiator if it can polymerize the above polymerizable monomers. Examples of the polymerization initiator include organic peroxides such as octanoyl peroxide, lauroyl peroxide, t-butylperoxy-2-ethylhexanoate, benzoyl peroxide, t-butylperoxyisobutyrate, t-butylperoxylaurate, t-hexylperoxybenzoate and di-t-butyl peroxide. The amount of the polymerization initiator may be within a known range which is used for the polymerization of a polymerizable monomer and is generally 0.01 to 10 parts by mass based on 100 parts by mass of the polymerizable monomer.

The conductive inorganic particles are basically the same as those listed above. The average primary particle diameter of the conductive inorganic particles is preferably 0.1 time or more the average pore diameter of the porous film reinforcement in use. Thereby, the conductive inorganic particles rarely enter the pores of the reinforcement, a layer comprising the conductive inorganic particles, polymerizable monomer and other optional components is formed on the reinforcement, and the polymerizable monomer and other optional components penetrate into the pores of the reinforcement. Although the reason why a filler having a smaller diameter than the diameter of the pores does not penetrate into the pores is unknown, it is assumed that these particles agglomerate into larger secondary particles. By using fibrous conductive inorganic particles as at least some of the conductive inorganic particles, the electronic conductivity of the electrode layer formed after polymerization can be improved. The blending ratio of the conductive inorganic particles to the above polymerizable monomer may be suitably determined according to application purpose. Preferably, when the conductive inorganic particles are used in an amount of 0.1 to 40 parts by mass based on 100 parts by mass of the polymerizable monomer, the operation ease of the slurry (polymerizable composition) is high and a laminate having a suitable electrode layer thickness for use in a fuel cell can be obtained.

Further, the slurry preferably contains a surfactant or elastomer as a dispersibility improving agent to improve the dispersibility of the conductive inorganic particles. The amount of this dispersibility improving agent is suitably determined according to the type and amount of the conductive inorganic particles contained in the slurry. It is, for example, 10 to 200 parts by mass based on 100 parts by mass of the conductive inorganic particles.

Further, the slurry may contain known additives for the manufacture of the ion exchange resin through the polymerization of the polymerizable monomer, such as solvent, plasticizer, etc., as required and an organic or inorganic filler other than the conductive inorganic particles.

The slurry containing the above polymerizable monomer, conductive inorganic particles and optional components is applied to the porous film reinforcement. The reinforcement has already been described above. The application method is not particularly limited. The above slurry is applied to the reinforcement with a brush or blade, or sprayed on the reinforcement, or the reinforcement is immersed in the slurry. Immersion is particularly preferred because manufacture is easy and uniformity is high. When the reinforcement is immersed in the slurry, even after the reinforcement is pulled up, the polymerizable monomer remaining on the surface of the reinforcement penetrates into the pores. Therefore, immersion does not need to be continued until the polymerizable monomer completely penetrates into the pores. The immersion time which depends on the type of the reinforcement and the composition of the slurry is generally 0.1 second to 20 minutes.

In the subsequent step (2), the polymerizable monomer is polymerized. The polymerization method is not particularly limited and a known method may be employed to polymerize the polymerizable monomer. In general, polymerization is preferably carried out by heating in the presence of the above peroxide polymerization initiator because its operation is easy and the polymerizable monomer can be polymerized relatively uniformly. More preferably, polymerization is carried out after the polymerizable monomer is covered with a film of a polyester or the like to prevent the retardation of polymerization by oxygen and to obtain surface smoothness. By covering with the film, an excess of the slurry is removed and a thin and uniform electrode assembly can be obtained. The temperature for thermal polymerization is not particularly limited and a known condition may be suitably selected and used. For example, the temperature is 50 to 150°C, preferably 60 to 120° C. When the slurry contains a solvent, the solvent can be removed prior to polymerization.

The laminate obtained by polymerization becomes the laminate of the present invention as it is when a polymerizable monomer having an ion exchangeable group is used as the polymerizable monomer. However, when a polymerizable monomer other than the above polymerizable monomer is used, an ion exchangeable group must be introduced into a resin which is a polymer of the polymerizable monomer in the step (3) to convert it into an ion exchange resin. The method of introducing the ion exchangeable group is not particularly limited and a known method may be suitably employed. For example, when styrene is used as the polymerizable monomer, it is brought into contact with sulfur trioxide, chlorosulfonic acid, fuming sulfuric acid or concentrated sulfuric acid and hydrolyzed as required to introduce a sulfonic acid group. When a methacrylic acid ester is used as the polymerizable monomer, a carboxylic acid group can be introduced by hydrolyzing its ester moiety. Thus, even when a polymerizable monomer having no ion exchangeable group is used as the above polymerizable monomer, the laminate of the present invention can be obtained. Needless to say, even when a polymerizable monomer having an ion exchangeable group is used as the polymerizable monomer, an ion exchangeable group may be further introduced as required to improve the content of ion exchangeable groups.

To carry a catalyst on the conductive inorganic particles in order to obtain an electrode assembly for fuel cells, conductive inorganic particles carrying a catalyst may be used, or a catalyst may be carried on the conductive inorganic particles after the laminate is manufactured by the above process. Further, when an ion exchangeable group is to be introduced after the polymerization of the polymerizable monomer, the catalyst may be carried on the conductive inorganic particles before or after the introduction of the ion exchangeable group.

A description is subsequently given of the second production process of the present invention. In the step (1) of this process, a polymerizable composition containing a polymerizable monomer capable of forming a crosslinked polymer, a polymerization initiator and other optional components is brought into contact with the porous film reinforcement to be infiltrated into the pores of the reinforcement as in the step (1) of the first production process except that the conductive inorganic particles are not contained in the composition. A solution containing the polymerizable monomer used in this process preferably contains non-conductive particles having an average primary particle long diameter which is 0.1 time or more the average pore diameter of the pores of the reinforcement and 50 μm or less, for example, a lamellar silicate having an average particle diameter of 0.5 to 2 μm and an aspect ratio of 50 to 2,000 to improve methanol impermeability as disclosed by Japanese Patent Application No. 2003-377454.

In the subsequent step (2), a conductive composition layer comprising conductive inorganic particles and a binder resin is formed on at least one side of the porous film reinforcement impregnated with the polymerizable composition and part of the polymerizable composition impregnated into the porous film reinforcement is moved and infiltrated into the layer.

That is, a molded sheet of the conductive composition comprising conductive inorganic particles and a binder resin is prepared and brought into contact with the reinforcement impregnated with the above polymerizable monomer and other components. At this point, the reinforcement and the above sheet are put together to bring one surface of the reinforcement into contact with the sheet. To form a conductive layer containing conductive inorganic particles on both sides of the ion exchange membrane layer of the laminate, the sheet is brought into contact with the both sides of the reinforcement impregnated with the polymerizable monomer and other components.

The method of manufacturing the above molded sheet of the conductive composition comprising conductive inorganic particles is not particularly limited, and a commercially available carbon sheet and the like may be used. Or powdery conductive inorganic particles may be hardened by pressure together with a binder resin. Alternatively, the sheet can be obtained by applying a composition prepared by dispersing or dissolving the conductive particles and the binder resin in a solvent to a flat surface and drying the coating film. The molded sheet of the composition comprising conductive inorganic particles is preferably formed or held on a flat film of a polyester or the like. The flat film improves the operation ease of bringing the sheet into contact with the reinforcement, smoothes the surface of the obtained laminate, and prevents the retardation of the polymerization of the polymerizable monomer by oxygen et al.

The polymerizable monomer and other components enter gaps between the conductive inorganic particles of the sheet-like product containing the conductive inorganic particles by the above contact. Therefore, as the contacting in the step (2), a laminate consisting of a portion composed of the reinforcement and the polymerizable monomer and other components infiltrated into the pores of the reinforcement and a portion composed of the conductive inorganic particles and the polymerizable monomer and other components infiltrated into the gaps between the conductive inorganic particles is formed. Subsequently, polymerization is carried out in the step (3) in the same manner as in the above first production process, and optionally further an ion exchangeable group is introduced in the step (4) to obtain the laminate of the present invention.

A laminate having different electrode layers on both sides of the ion exchange membrane layer can be manufactured by using different conductive inorganic particles, for example, conductive inorganic particles carrying different catalysts to form different electrode layers on the respective sides of the ion exchange membrane layer in this second production process. In the above-described fuel cell, as the diffusion electrode on the fuel chamber side and the gas diffusion electrode on the oxidant chamber side differ from each other in the optimum catalyst in many cases, conductive inorganic particles carrying different catalysts are particularly useful.

Further in this second production process, different catalysts carried by the conductive inorganic particles may be contained in the electrode layer existent on the same side of the ion exchange membrane layer.

The two processes enumerated to manufacture the laminate of the present invention are typical, and various modifications and changes may be made on these processes as required or the both processes may be combined. For example, in the above second process, a paste comprising conductive inorganic particles and a polymerizable monomer copolymerizable with the polymerizable monomer infiltrated into the reinforcement is prepared and applied to a polyester film in order to form a sheet-like product containing the conductive inorganic particles. In this case, the polymerizable monomer existent between the conductive inorganic particles and the polymerizable monomer existent in the pores of the reinforcement can be made different and therefore, the ion exchange resin of the electrode layer and the ion exchange resin of the ion exchange membrane layer in the obtained laminate can be made different. Stated more specifically, for example, when styrene and divinylbenzene are used as polymerizable monomers to be infiltrated into the reinforcement and only styrene is used as the polymerizable monomer to be used in combination with the conductive inorganic particles, the ion exchange resin of the ion exchange membrane layer of the obtained laminate becomes crosslinked and the ion exchange resin of the electrode layer becomes non-crosslinked.

A process for manufacturing the laminate by using a polymer having a polymerizable unsaturated group, preparing a paste comprising the polymer, conductive inorganic particles and a diluting solvent, applying the paste to a polyester film and drying it to form a sheet containing the conductive inorganic particles, and bringing the sheet into contact with a reinforcement impregnated with a polymerizable monomer to carry out polymerization may be employed. Further, a process for manufacturing a laminate by bringing a porous reinforcement into contact with conductive inorganic particles and impregnating the reinforcement with a polymerizable monomer to carry out polymerization may also be employed.

A paste containing the above conductive inorganic particles and a polymerizable monomer (or a polymer having a polymerizable group) may be mixed with a non-polymerizable compound such as polyethylene glycol or polyvinyl pyrrolidone. When the compound is removed by rinsing with water or the like after polymerization, the electrode layer becomes relatively rough, thereby making it easy to move a fuel in the electrode layer.

In the laminate of the present invention manufactured as described above, the total ion exchange capacity of the ion exchange membrane layer and the electrode layer is 0.3 to 5.0 mmol/g and the ion exchange capacity of the electrode layer alone is 0.1 to 5.0 mmol/g. The laminate resistance measured by sandwiching the laminate between platinum black electrodes in accordance with an AC impedance method, which is greatly changed by the amount of the conductive inorganic particles, is preferably 1 to 1,000 $\Omega \cdot cm^2$, and the electric resistance of the surface of the electrode layer (to be referred to as "electrode surface resistance" hereinafter) is preferably 0.005 to 1,000 k$\Omega$/cm.

Further, since the ion exchange resins of the ion exchange membrane layer and the electrode layer are integrated with each other in the laminate of the present invention, the ion exchangeable groups are continuously distributed according to the linear analysis of the section of the laminate by an electron beam macroanalyzer. Since the electrode layer is strongly bonded to the ion exchange membrane layer, right after the manufacture of the laminate and after 250 hours of continuous power generation when the laminate is incorporated into a direct methanol type fuel cell, the laminate shows a peeling strength of 8 to 10 points in a tape peeling test based on the JISK-5400 X cut tape method.

The use of the laminate of the present invention is not particularly limited. When it is used as an electrode assembly for fuel cells, it may be used in accordance with the known method described above. It may also be used as an electrode assembly for electrochemical sensors, air cleaners and dehumidifiers in addition to fuel cells. Therefore, according to the present invention, there is provided a fuel cell, for example, a direct methanol type fuel cell comprising the laminate of the present invention as a membrane-electrode assembly.

Examples

The following examples and comparative examples are provided for the purpose of further illustrating the present invention but are in no way to be taken as limiting. The characteristic properties of electrode assemblies shown in the examples and comparative examples were indicated as the values measured by the following methods.

1) ion exchange capacity

The electrode assembly was immersed in a 1 mol/l-HCl aqueous solution for 10 hours or longer.

Thereafter, in the case of a cation exchange membrane, the counter ion of the ion exchangeable group was changed from a hydrogen ion to a sodium ion with a 1 mol/l-NaCl aqueous solution to determine the amount (A mol) of the liberated hydrogen ion by a potential difference titrator (COMTITE-900 of Hiranuma Sangyo Co., Ltd.) using a sodium hydroxide aqueous solution. In the case of an anion exchange membrane, the counter ion was changed from a chloride ion to a nitrate ion with a 1 mol/l-NaNO$_3$ aqueous solution to determine the amount (A mol) of the liberated chloride ion by a potential difference titrator (COMTITE-900 of Hiranuma Sangyo Co., Ltd.) using a silver nitrate aqueous solution.

The same electrode assembly was immersed in a 1 mol/1-HCl aqueous solution for 4 hours or longer, fully rinsed with ion exchange water and dried under reduced pressure at 60° C for 5 hours to measure its weight (D g) when it was dry.

Thereafter, an appropriate amount (E g) of only the electrode layer was scraped off with a cutter knife to determine the quantity (B mol) of S by elemental analysis when the ion exchange membrane was cation exchangeable and to determine the quantity (B mol) of N by elemental analysis when the ion exchange membrane was anion exchangeable.

Based on the above measurement value, the total ion exchange capacity of the ion exchange membrane-electrode assembly and the ion exchange capacity of the electrode layer were obtained from the following expressions.

$$\text{Total ion exchange capacity(mmol/g-dry weight)} = A \times 1000/D$$

$$\text{Ion exchange capacity of electrode layer (mmol/g-dry weight)}$$

$$= B \times 1000/E$$

2) amount of carried catalyst metal

The electrode assembly having a predetermined area was immersed in aqua regia diluted with ion exchange water to 2 times for 24 hours to dissolve a metal catalyst, and the obtained solution was analyzed by induction coupling plasma emission spectral analysis to obtain the amount of the carried catalyst metal.

3) thickness of electrode layer

The section of the electrode assembly was observed through a scanning electron microscope(SEM) to obtain the thickness of the electrode layer on one side of the laminate.

4) Assembly resistance and electrode surface resistance

The counter ion of the ion exchangeable group contained in the laminate was changed to a hydrogen ion and a hydroxide ion with a 0.1 mol/L-HCL aqueous solution in the case of an electrode assembly including a cation exchange membrane and with a 0.1 mol/L-sodium hydroxide aqueous solution in the case of an electrode assembly including an anion exchange membrane, respectively.

Thereafter, the above electrode assembly was sandwiched between platinum black electrodes to measure an AC impedance in the air (25°C, relative humidity of 80 %) at a frequency of 50 Hz to 2.5 MHz with an LCR meter (3532-50 of HIOKI E.E. Corporation). The assembly resistance was obtained by subtracting an impedance obtained without sandwiching the laminate from an impedance at a first inflection point on a low frequency side in the obtained cole-cole plot.

The same electrode assembly was used to measure the impedance of the surface of the electrode layer so as to obtain electrode surface resistance in the same manner as the assembly resistance.

5) Bonding properties

A tape peeling test was made on the electrode assembly right after its manufacture in accordance with JISK-5400 X cut tape method. After the tape was peeled off, the state of the electrode layer remaining on the ion exchange membrane layer was evaluated by a 10-point method visually and taken as bonding properties right after manufacture.
In a fuel cell output voltage test on the following page, the electrode assembly was taken out from the cell after 250 hours of continuous power generation at 0.1 A/cm$^2$ and a tape peeling test was made on the laminate in the same manner as the electrode assembly right after its manufacture to evaluate its bonding properties.

6) fuel cell output voltage

The electrode assembly was sandwiched between carbon paper sheets subjected to a water-repellency treatment with polytetrafluoroethylene and having a thickness of 100 μm and a porosity of 80 %, and the resulting laminate was incorporated into the fuel cell having a structure shown in Fig. 1. Thereafter, the temperature of the fuel cell was set to 25° C, a 20 mass% methanol aqueous solution was supplied into the fuel chamber(7), atmospheric pressure oxygen was supplied into the oxidant chamber(8) at 200 ml/min to carry out a power generation test, and the terminal voltage of the cell at a current density of 0 A/cm$^2$ and 0.1 A/cm$^2$ was measured.

7) evaluation of durability

After the measurement of the above output voltage, a continuous power generation test was carried out at 25° C and 0.1 A/cm$^2$ to measure output voltage after 250 hours so as to evaluate the durability of the electrode assembly.

Example 1

80 parts by mass of carbon black carrying a catalyst (50 mass% of platinum-ruthenium alloy containing 50 mol% of ruthenium), 10 parts by mass of carbon fiber (fiber diameter of 0.15 μm, fiber length of 10 to 20 μm), 5 parts by mass of polystyrene-poly(ethylene-butylene)-polystyrene triblock copolymer (styrene content of 30 %, molecular weight of 120,000) and 5 parts by mass of syndiotactic 1,2-polybutadiene (molecular weight of 150,000) were dispersed in 900 parts by mass of an organic solvent (95 mass% of tetrahydrofuran, 5 mass% of N,N-dimethylformamide) to prepare a slurry, and this slurry was applied to a polytetrafluoroethylene (PTFE) film and dried under reduced pressure at 25°C for 5 hours and then at 80°C for 4 hours to obtain a conductive inorganic particle sheet.
Separately, a monomer composition comprising 90 parts by mass of styrene, 10 parts by mass of divinylbenzene (8.2 mol% based on the total of all the polymerizable monomers) and 5 parts by mass of t-butylperoxyethyl hexanoate was prepared, and a porous stretched film (film thickness of 25 μm, porosity of 37 %, pore diameter of 0.03 μm) made of polyethylene (PE, weight average molecular weight of 250,000) was immersed in this composition under atmospheric pressure at 25° C for 10 minutes to impregnate the film with the monomer composition.
Subsequently, the porous stretched film was taken out from the monomer composition, and the conductive inorganic particle sheet on the PTFE film was positioned so that the conductive inorganic particles were brought into contact with the porous stretched film. Another conductive inorganic particle sheet formed similarly was placed on the other side of the porous stretched film and thermally polymerized under a nitrogen pressure of 0.3 MPa at 80° C for 5 hours to obtain an electrode assembled precursor film. The obtained electrode assembled precursor film was immersed in a 1:1 mixture of 98 % concentrated sulfuric acid and chlorosulfonic acid having a purity of 90 % or more at 40° C for 45 minutes to obtain a sulfonic acid type cation exchange membrane-electrode assembly. The total ion exchange capacity, the thickness of the electrode layer, the ion exchange capacity of the electrode layer, the amount of the carried catalyst metal, assembly resistance, electrode surface resistance, bonding properties, fuel cell output voltage and durability of the obtained electrode assembly were measured. These results are shown in Table 2. When the sections of ion exchange membrane of this electrode assembly and the electrode layer on one side were analyzed by an electron beam microanalyzer, as shown in Fig. 3, it was confirmed that the S strength of a sulfonic acid group which is an ion exchangeable group continuously changed between the ion exchange membrane layer and the electrode layer.

Examples 2 to 4

Electrode assemblies were obtained in the' same manner as in Example 1 except that the slurry comprising conductive inorganic particles was changed as shown in Table 1. The total ion exchange capacity, the thickness of the electrode layer, the ion exchange capacity of the electrode layer, the amount of the carried catalyst metal, laminate resistance, electrode surface resistance, bonding properties, fuel cell output voltage and durability of each of the obtained electrode assemblies were measured and shown in Table 2.

Comparative Example 1

A sulfonic acid type cation exchange membrane which was not bonded to an electrode layer was obtained in the same manner as in Example 1 except that a conductive inorganic particle sheet was not used and a 100 μm-thick polyester film was used as a releasing material.

Thereafter, a mixture of the same carbon black carrying 50 mass% of a platinum-ruthenium alloy catalyst (50 mol% of ruthenium) as in Example 1 and a 1-propanol/dichloroethane solution of a sulfonated resin of a polystyrene-poly(ethylene-butylene)-polystyrene triblock copolymer (ion exchange capacity of 1.0 mmol/g) (concentration of 5 mass%) was applied to this cation exchange membrane and dried under reduced pressure at 25°C for 5 hours and at 80° C for 4 hours, and the obtained film was hot-pressed under a pressure of 5 MPa at 100°C for 100 seconds and left at room temperature for 2 minutes to obtain a cation exchange membrane-electrode assembly. The total ion exchange capacity, the thickness of the electrode layer, the ion exchange capacity of the electrode layer, the amount of the carried catalyst metal, assembly resistance, electrode surface resistance, bonding properties, fuel cell output voltage and durability of the obtained electrode assembly were measured and shown in Table 2.

## Table 1

| Example | Solid content [wt%] | Solvent [1] | Composition of solid content of catalyst slurry [parts by mass] | | | |
|---------|---------------------|-------------|-------------|--------|----------|--------|
| | | | Pt-Ru/C [2] | CF [3] | SEBS [4] | PB [5] |
| 1 | 10 | THF/DMF | 80 | 10 | 5 | 5 |
| 2 | 10 | THF/DMF | 90 | 0 | 5 | 5 |
| 3 | 10 | THF/DMF | 80 | 10 | 0 | 10 |
| 4 | 7 | THF/DMF | 50 | 10 | 20 | 20 |

Notes

1)  THF/DMF: 95 mass% of tetrahydrofuran, 5 mass% of N,N-dimethylformamide

2)  Pt-Ru/C: carbon black carrying 50 mass% of platinum-ruthenium alloy (50 mol% of ruthenium)

3)  CF: carbon fiber having a fiber diameter of 0.15 μm and a fiber length of 10 to 20 μm

4)  SEBS: polystyrene-poly(ethylene-butylene)-polystyrene triblock copolymer (styrene content of 30 %, molecular weight of 120,000)

5)  PB: syndiotactic 1,2-polybutadiene (molecular weight of 150,000)

EP 1 496 561 A2

Table 2

| Ex. | Thickness of electrode layer [μm] | Amount of carried catalyst metal [mg/cm²] | Total ion exchange capacity [mmol/g] | Ion exchange capacity of electrode layer [mmol/g] | Resistance of assembly [Ω·cm²] | Resistance of electrode surface [kΩ/cm] | Evaluation of bonding properties [score] | | Fuel cell output voltage [V] | | Evaluation of durability (after 250 hours of power generation[V]) |
|---|---|---|---|---|---|---|---|---|---|---|---|
| | | | | | | | Right after manufacture | After 250 hours of power generation | 0 A/cm² | 0.1 A/cm² | 0.1 A/cm² |
| 1 | 12 | 0.9 | 1.4 | 0.7 | 4 | 0.2 | 10 | 10 | 0.68 | 0.33 | 0.31 |
| 2 | 13 | 1.0 | 1.5 | 0.8 | 6 | 2 | 10 | 10 | 0.65 | 0.24 | 0.21 |
| 3 | 12 | 0.9 | 1.3 | 0.6 | 5 | 0.2 | 10 | 10 | 0.70 | 0.28 | 0.27 |
| 4 | 22 | 1.0 | 1.5 | 1.0 | 6 | 1 | 10 | 10 | 0.72 | 0.26 | 0.24 |
| C. Ex. 1 | 16 | 1.0 | 1.2 | 0.3 | 7 | 1 | 4 | 0 | 0.60 | 0.20 | 0.06 |

Ex.: Example

C.Ex.: Comparative Example

Example 5

An electrode assembled precursor comprising a conductive inorganic particle sheet was obtained in the same manner as in Example 1 except that styrene contained in the monomer composition was changed to chloromethylstyrene. Thereafter, the precursor was reacted in an amination bath comprising 10 parts by mass of 30 mass% trimethylamine aqueous solution, 5 parts by mass of water and 5 parts by mass of acetone at room temperature for 5 hours to obtain a quaternary ammonium salt type anion exchange membrane-electrode assembly.

The total ion exchange capacity, the thickness of the electrode layer, the ion exchange capacity of the electrode layer, the amount of the carried catalyst metal, assembly resistance, electrode surface resistance, bonding properties, fuel cell output voltage and durability of the obtained electrode assembly were measured and shown in Table 3.

Comparative Example 2

A quaternary ammonium salt type anion exchange membrane which was not bonded to an electrode layer was obtained in the same manner as in Example 5 except that a conductive inorganic particle sheet was not used and a 100 $\mu$m-thick polyester film was used as a releasing material.

Thereafter, an N,N-dimethylformamide slurry containing 3.5 mass% of the same carbon black carrying a catalyst as in Example 1 and 1.5 mass% of N-methylated resin of poly(4-vinylpyridine) (molecular weight of 60,000, methylation rate of 20 mol%) was applied to this anion exchange membrane and dried under reduced pressure at 25°C for 5 hours and at 80° C for 4 hours. Subsequently, the above film was hot-pressed under a pressure of 5 MPa at 100° C for 100 seconds and left at room temperature for 2 minutes to obtain an anion exchange membrane-electrode assembly. The total ion exchange capacity, the thickness of the electrode layer, the ion exchange capacity of the electrode layer, the amount of the carried catalyst metal, assembly resistance, electrode surface resistance, bonding properties, fuel cell output voltage and durability of the obtained electrode assembly were measured and shown in Table 3.

Table 3

| Ex. | Thick-ness of elect-rode layer [μm] | Amount of carried catalyst metal [mg/cm²] | Total ion exchange capacity [mmol/g] | Ion exchange capacity of elect-rode layer [mmol/g] | Resist-ance of assembly [Ω·cm²] | Resist-ance of electrode surface [kΩ/cm] | Evaluation of bonding properties [score] | | Fuel cell output voltage [V] | | Evalua-tion of durabi-lity (after 250 hours of power genera-tion[V]) |
|---|---|---|---|---|---|---|---|---|---|---|---|
| | | | | | | | Right after manufac-ture | After 250 hours of power genera-tion | 0 A/cm² | 0.1 A/cm² | 0.1 A/cm² |
| 5 | 12 | 0.9 | 1.0 | 0.6 | 7 | 0.2 | 10 | 10 | 0.69 | 0.26 | 0.24 |
| C. Ex. 2 | 16 | 1.0 | 0.9 | 0.4 | 9 | 1 | 2 | 0 | 0.65 | 0.15 | 0.04 |

Ex.: Example

C.Ex.: Comparative Example

EP 1 496 561 A2

Examples 6 and 7

A slurry containing conductive inorganic particles shown in Table 4 was prepared, applied to carbon paper (thickness of 100 µm, porosity of 80 %) which was subjected to a water-repellency treatment and dried under reduced pressure at 25° C for 5 hours and at 80° C for 4 hours to form an electrode sheet comprising carbon paper and a conductive inorganic particle layer.

Thereafter, a sulfonic acid type cation exchange membrane-electrode assembly was obtained in the same manner as in Example 1 except that the above electrode sheet was used. The total ion exchange capacity, the thickness of the electrode layer, the ion exchange capacity of the electrode layer, the amount of the carried catalyst metal, assembly resistance, electrode surface resistance, bonding properties, fuel cell output voltage and durability of each of the obtained electrode assemblies were measured and shown in Table 5.

Comparative Example 3

A 1-propanol/dichloroethane slurry containing 3.5 mass% of the same carbon black carrying a catalyst as in Example 1 and 1.5 mass% of a sulfonated resin of a polystyrene-poly(ethylene-butylene)-polystyrene triblock copolymer (ion exchange capacity of 1.0 mmol/g) was applied to the same carbon paper as in Example 6 and dried under reduced pressure at 25° C for 5 hours and 80° C for 4 hours.

The above carbon paper was placed on both sides of a sulfonic acid type cation exchange membrane which was not bonded to an electrode layer, obtained in the same manner as in Comparative Example 1, to ensure that the catalytic metal layer came into contact with the ion exchange membrane and hot-pressed to the ion exchange membrane under a pressure of 5 MPa at 100° C for 100 seconds and left at room temperature for 2 minutes to obtain a cation exchange membrane-electrode assembly. The total ion exchange capacity, the thickness of the electrode layer, the ion exchange capacity of the electrode layer, the amount of the carried catalyst metal, assembly resistance, electrode surface resistance, bonding properties, fuel cell output voltage and durability of the obtained electrode assembly were measured and shown in Table 5.

## Table 4

| Example | Solid content [wt%] | Solvent [1] | Composition of solid content of catalyst slurry [parts by mass] | | | |
|---|---|---|---|---|---|---|
| | | | Pt-Ru/C [2] | CF [3] | SEBS [4] | PB [5] |
| 6 | 15 | THF/DMF | 80 | 10 | 5 | 5 |
| 7 | 15 | THF/DMF | 90 | 0 | 5 | 5 |

Notes

1) THF/DMF: 95 mass% of tetrahydrofuran, 5 mass% of N,N-dimethylformamide

2) Pt-Ru/C: carbon black carrying 50 mass% of platinum-ruthenium alloy (50 mol% of ruthenium)

3) CF: carbon fiber having a fiber diameter of 0.15 μm and a fiber length of 10 to 20 μm

4) SEBS: polystyrene-poly(ethylene-butylene)-polystyrene triblock copolymer (styrene content of 30 %, molecular weight of 120,000)

5) PB: syndiotactic 1,2-polybutadiene (molecular weight of 150,000)

Table 5

| Ex. | Thickness of electrode layer [μm] | Amount of carried catalyst metal [mg/cm²] | Total ion exchange capacity [mmol/g] | Ion exchange capacity of electrode layer [mmol/g] | Resistance of assembly [Ω·cm²] | Resistance of electrode surface [kΩ/cm] | Evaluation of bonding properties [score] | | Fuel cell output voltage [V] | | Evaluation of durability (after 250 hours of power generation[V]) |
|---|---|---|---|---|---|---|---|---|---|---|---|
| | | | | | | | Right after manufacture | After 250 hours of power generation | 0 A/cm² | 0.1 A/cm² | 0.1 A/cm² |
| 6 | 106 | 1.0 | 0.8 | 0.4 | 4 | 0.01 | 10 | 10 | 0.70 | 0.35 | 0.33 |
| 7 | 107 | 1.1 | 0.8 | 0.4 | 5 | 0.01 | 10 | 10 | 0.67 | 0.32 | 0.30 |
| C. Ex. 3 | 100 | 1.0 | 0.7 | 0.15 | 7 | 0.01 | 4 | 0 | 0.63 | 0.21 | 0.06 |

Ex.: Example

C.Ex.: Comparative Example

Examples 8 to 11

A composition containing conductive inorganic particles shown in Table 6 was prepared, and a porous film shown in Table 6 was immersed in this composition under atmospheric pressure at 25° C for 10 minutes and then taken out from the composition. Thereafter, a 100 μm-thick polyester film was formed on both sides of the porous film to carry out thermal polymerization under a nitrogen pressure of 0.3 MPa at 80° C for 5 hours. The obtained film-like product was immersed in a 1:1 mixture of 98 % concentrated sulfuric acid and chlorosulfonic acid having a purity of 90 % or more at 40° C for 45 minutes to obtain a sulfonic acid type cation exchange membrane-electrode assembly. The total ion exchange capacity, the thickness of the electrode layer, the ion exchange capacity of the electrode layer, the amount of the carried catalyst metal, assembly resistance, electrode surface resistance, bonding properties, fuel cell output voltage and durability of each of the obtained electrode assemblies were measured and shown in Table 7.

Table 6

| Example | Porous film [1] | Composition[parts by mass] | | | | | | |
|---|---|---|---|---|---|---|---|---|
| | | St [2] | DVB [3] | | PO [4] | Pt-Ru/C [5] | CF [6] | SEBS [7] |
| | | | [parts by mass] | [mol%] | | | | |
| 8 | A | 90 | 10 | 8.2 | 5 | 20 | 0 | 15 |
| 9 | A | 90 | 10 | 8.2 | 5 | 15 | 5 | 10 |
| 10 | A | 80 | 20 | 16.7 | 5 | 15 | 5 | 10 |
| 11 | B | 90 | 10 | 8.2 | 5 | 15 | 5 | 10 |

Notes)

1) porous film
A: polyethylene stretched film having a weight average molecular weight of 250,000, a film thickness of 25 μm, a pore diameter of 0.03 μm and a porosity of 37 %
B: polyethylene stretched film having a weight average molecular weight of 200,000, a film thickness of 16 μm, a pore diameter of 0.03 μm and a porosity of 41 %
2) St: styrene
3) DVB: divinylbenzene
4) PO: t-butylperoxyethyl hexanoate
5) Pt-Ru/C: carbon black carrying 50 mass% of platinum-ruthenium alloy (50 mol% of ruthenium)
6) CF: carbon fiber having a fiber diameter of 0.15 μm and a fiber length of 10 to 20 μm
7) SEBS: polystyrene-poly(ethylene-butylene)-polystyrene triblock copolymer (styrene content of 30 %, molecular weight of 120,000)

EP 1 496 561 A2

Table 7

| Ex. | Thickness of electrode layer [μm] | Amount of carried catalyst metal [mg/cm²] | Total ion exchange capacity [mmol/g] | Ion exchange capacity of electrode layer [mmol/g] | Resistance of assembly [Ω·cm²] | Resistance of electrode surface [kΩ/cm] | Evaluation of bonding properties [score] | | Fuel cell output voltage [V] | | Evaluation of durability (after 250 hours of power generation[V]) |
|---|---|---|---|---|---|---|---|---|---|---|---|
| | | | | | | | Right after manufacture | After 250 hours of power generation | 0 A/cm² | 0.1 A/cm² | 0.1 A/cm² |
| 8 | 22 | 0.8 | 2.3 | 2.4 | 8 | 24 | 10 | 10 | 0.80 | 0.18 | 0.17 |
| 9 | 25 | 0.7 | 2.4 | 2.5 | 6 | 5 | 10 | 10 | 0.79 | 0.23 | 0.22 |
| 10 | 25 | 0.7 | 2.0 | 2.2 | 7 | 6 | 10 | 10 | 0.82 | 0.21 | 0.20 |
| 11 | 24 | 0.7 | 2.4 | 2.4 | 8 | 5 | 10 | 10 | 0.78 | 0.25 | 0.23 |

Ex.: Example

Examples 12 and 13

A polymerizable composition shown in Table 8 was prepared, and a porous film shown in Table 8 was immersed in this composition under atmospheric pressure at 25° C for 10 minutes and then taken out from the composition. Thereafter, a 100 μm-thick polyester film was formed on both sides of this porous film to carry out thermal polymerization under a nitrogen pressure of 0.3 MPa at 80°C for 5 hours. The obtained film was reacted in an amination bath comprising 10 parts by mass of 30 mass% trimethylamine aqueous solution, 5 parts by mass of water and 5 parts by mass of acetone at room temperature for 5 hours so as to obtain a quaternary ammonium salt type anion exchange membrane-electrode assembly.

The total ion exchange capacity, the thickness of the electrode layer, the ion exchange capacity of the electrode layer, the amount of the carried catalyst metal, assembly resistance, electrode surface resistance, bonding properties, fuel cell output voltage and durability of each of the obtained electrode assemblies were measured and shown in Table 9.

Table 8

| Example | Porous film [1] | Composition[parts by mass] | | | | | | |
|---|---|---|---|---|---|---|---|---|
| | | CMS [2] | DVB [3] [parts by mass] | DVB [3] [mol%] | PO [4] | Pt-Ru/C [5] | CF [6] | SEBS [7] |
| 12 | A | 90 | 10 | 8.2 | 5 | 15 | 5 | 10 |
| 13 | B | 80 | 20 | 16.7 | 5 | 15 | 5 | 10 |

Notes)

1) porous film

A: polyethylene stretched film having a weight average molecular weight of 250,000, a film thickness of 25 μm, a pore diameter of 0.03 μm and a porosity of 37 %

B: polyethylene stretched film having a weight average molecular weight of 200,000, a film thickness of 16 μm, a pore diameter of 0.03 μm and a porosity of 41 %

2) CMS: chlormethyl styrene

3) DVB: divinylbenzene

4) PO: t-butylperoxyethyl hexanoate

5) Pt-Ru/C: carbon black carrying 50 mass% of platinum-ruthenium alloy (50 mol% of ruthenium) and having an average primary diameter of 0.039μm

6) CF: carbon fiber having a fiber diameter of 0.15 μm and a fiber length of 10 to 20 μm

7) SEBS: polystyrene-poly(ethylene-butylene)-polystyrene triblock copolymer (styrene content of 30 %, molecular weight of 120,000)

24

Table 9

| Ex. | Thickness of electrode layer [μm] | Amount of carried catalyst metal [mg/cm$^2$] | Total ion exchange capacity [mmol/g] | Ion exchange capacity of electrode layer [mmol/g] | Resistance of assembly [Ω·cm$^2$] | Resistance of electrode surface [kΩ/cm] | Evaluation of bonding properties [score] | | Fuel cell output voltage [V] | | Evaluation of durability (after 250 hours of power generation[V]) |
|---|---|---|---|---|---|---|---|---|---|---|---|
| | | | | | | | Right after manufacture | After 250 hours of power generation | 0 A/cm$^2$ | 0.1 A/cm$^2$ | 0.1 A/cm$^2$ |
| 12 | 23 | 0.7 | 1.8 | 2.0 | 9 | 6 | 10 | 10 | 0.80 | 0.17 | 0.15 |
| 13 | 22 | 0.7 | 1.9 | 2.0 | 8 | 7 | 10 | 10 | 0.79 | 0.15 | 0.13 |

Ex.: Example

Examples 14 to 16

Sulfonic acid type cation exchange membrane-electrode assemblies were obtained in the same manner as in Example 1 except that a polymerizable composition and a porous film shown in Table 10 were used. The total ion exchange capacity, the thickness of the electrode layer, the ion exchange capacity of the electrode layer and bonding properties of each of the ion exchange membrane-electrode assemblies were measured and shown in Table 11.

Comparative Example 4

A sulfonic acid type cation exchange membrane which was not bonded to an electrode layer was obtained in the same manner as in Comparative Example 1 except that the same porous film used in Examples 14 to 16 was used.
Thereafter, a 1-propanol/dichloroethane slurry containing 0.43 mass% of the same carbon black as in Example 14 and 9.57 mass% of a sulfonated resin of a polystyrene-poly(ethylene-butylene)-polystyrene triblock copolymer (an ion exchange capacity of 1.0 mmol/g) was applied to this cation exchange membrane and dried under reduced pressure at 25° C for 5 hours and 80°C for 4 hours. Subsequently, the above film-like product was hot-pressed to the cation exchange membrane under a pressure of 5 MPa at 100°C for 100 seconds and left at room temperature for 2 minutes to obtain a cation exchange membrane-electrode assembly. The total ion exchange capacity, the thickness of the electrode layer, the ion exchange capacity of the electrode layer, assembly resistance, electrode surface resistance and bonding properties of the obtained electrode assembly were measured and shown in Table 11.

Comparative Example 5

A cation exchange membrane-electrode assembly was obtained in the same manner as in Comparative Example 4 except that a 1-propanol/dichloroethane slurry containing 0.43 mass% of the same carbon fiber as in Example 15 and 9.57 mass% of a sulfonated resin of a polystyrene-poly(ethylene-butylene)-polystyrene triblock copolymer (ion exchange capacity of 1.0 mmol/g) was used. The total ion exchange capacity, the thickness of the electrode layer, the ion exchange capacity of the electrode layer, assembly resistance, electrode surface resistance and bonding properties of the obtained electrode assembly were measured and shown in Table 11.

Comparative Example 6

A cation exchange membrane-electrode assembly was obtained in the same manner as in Comparative Example 4 except that a 1-propanol/dichloroethane slurry containing 0.22 mass% of the same carbon black and 0.22 mass% of the same carbon fiber as in Example 16 and 9.56 mass% of a sulfonated resin of a polystyrene-poly(ethylene-butylene)-polystyrene triblock copolymer (ion exchange capacity of 1.0 mmol/g) was used. The total ion exchange capacity, the thickness of the electrode layer, the ion exchange capacity of the electrode layer, assembly resistance, electrode surface resistance and bonding properties of the obtained electrode assembly were measured and shown in Table 11.

Table 10

| Example | Composition[parts by mass] | | | | | | |
|---------|------|------|-------|------|------|------|---------|
| | St [1) | DVB [2) | | PO [3) | CB [4) | CF [5) | SEBS [6) |
| | | [parts by mass] | [mol%] | | | | |
| 14 | 90 | 10 | 8.2 | 5 | 5 | - | 5 |
| 15 | 90 | 10 | 8.2 | 5 | - | 5 | 5 |
| 16 | 90 | 10 | 8.2 | 5 | 2.5 | 2.5 | 5 |

Notes)

1) St: styrene
2) DVB: divinylbenzene
3) PO: t-butylperoxyethyl hexanoate
4) CB: carbon black having an average primary particle diameter of 0.030 μm
5) CF: carbon fiber having a fiber diameter of 0.15 μm and a fiber length of 10 to 20 μm
6) SEBS: polystyrene-poly(ethylene-butylene)-polystyrene triblock copolymer (styrene content of 30 %, molecular weight of 120,000)
* Porous film: polyethylene stretched film having a weight average molecular weight of 250,000, a film thickness of 20 μm, a pore diameter of 0.03 μm and a porosity of 44 %

Table 11

| Ex. | Thickness of electrode layer [μm] | Total ion exchange capacity [mmol/g] | Ion exchange capacity of electrode layer [mmol/g] | Resistance of assembly [Ω·cm²] | Resistance of electrode surface [kΩ/cm] | Evaluation of bonding properties [score] |
|---|---|---|---|---|---|---|
| | | | | | | Right after manufacture |
| 14 | 5 | 1.9 | 2.0 | 7 | 95 | 10 |
| 15 | 4 | 1.8 | 1.9 | 6 | 25 | 10 |
| 16 | 5 | 1.9 | 2.0 | 6 | 30 | 10 |
| C. Ex. 4 | 7 | 1.7 | 1.5 | 11 | 400 | 4 |
| C. Ex. 5 | 7 | 1.7 | 1.5 | 8 | 100 | 2 |
| C. Ex. 6 | 8 | 1.6 | 1.5 | 8 | 150 | 4 |

Ex.: Example

C.Ex.: Comparative Example

EP 1 496 561 A2

Since the ion exchange resin of the conductive layer and the crosslinked ion exchange resin of the ion exchange membrane layer are integrated with each other in the laminate of the present invention as described above, even when an ion exchange membrane layer essentially composed of a crosslinked ion exchange resin having excellent dimensional stability, heat resistance and methanol impermeability is used, bonding properties between the ion exchange membrane layer and the catalytic electrode layer are extremely high. Therefore, ion conductivity between the electrode layers formed on both sides of the ion exchange membrane layer becomes high, and a high output voltage can be obtained when this laminate is used in a fuel cell, for example.

Further, high bonding properties can be maintained not only right after the manufacture of the laminate but also after long-term use and after immersion in a methanol aqueous solution due to the above structure. Accordingly, when it is used in a direct methanol type fuel cell, a high output voltage can be obtained for a long time.

Since the laminate of the present invention can retain excellent characteristic properties for a long time due to ion conductivity as described above, it is extremely effective in the implementation of an electrochemical device such as a fuel cell.

**Claims**

1. A laminate consisting of an ion exchange membrane layer comprising a porous film reinforcement and a crosslinked ion exchange resin and a conductive layer formed on at least one side of the ion exchange membrane layer and comprising conductive inorganic particles and a crosslinked ion exchange resin, wherein
   the ion exchange membrane layer and the conductive layer are integrated with each other by the above ion exchange resins constituting these layers.

2. A process for producing the laminate of claim 1, comprising the steps of:

   (1) applying a polymerizable composition comprising a polyfunctional polymerizable monomer, conductive inorganic particles and a polymerization initiator to a porous film reinforcement and moving and infiltrating part of the polymerizable composition into the pores of the porous film reinforcement;
   (2) polymerizing the polymerizable composition to integrate the porous film reinforcement with the layer of the polymerizable composition by the formed crosslinked polymer; and
   (3) optionally introducing an ion exchangeable group into the crosslinked polymer of the obtained laminate.

3. A process for producing the laminate of claim 1, comprising the steps of:

   (1) impregnating a porous film reinforcement with a polymerizable composition comprising a polyfunctional polymerizable monomer and a polymerization initiator;
   (2) forming a layer of a conductive composition comprising conductive inorganic particles and a binder resin on at least one side of the porous film reinforcement impregnated with the polymerizable composition and moving and infiltrating part of the polymerizable composition impregnated into the porous film reinforcement into the layer;
   (3) polymerizing the polymerizable composition to integrate the porous film reinforcement with the layer of the conductive composition by the formed crosslinked polymer; and
   (4) optionally introducing an ion exchangeable group into the crosslinked polymer of the obtained laminate.

4. Use of the laminate of claim 1 as the membrane-electrode assembly of a fuel cell.

5. Use of claim 4, wherein the fuel cell is a direct methanol type fuel cell.

6. A fuel cell comprising the laminate of claim 1 as a membrane-electrode assembly.

7. The fuel cell of claim 6 which is a direct methanol type fuel cell.

Fig. 1

Fig. 2

Fig. 3